# EUROPÄISCHE PATENTSCHRIFT

(11) **EP 3 175 305 B1**
(45) Veröffentlichungstag und Bekanntmachung des Hinweises auf die Patenterteilung: **12.02.2020**
(21) Anmeldenummer: 15737982.7
(22) Anmeldetag: 09.07.2015
(51) Int. Cl.: G05B 19/10, G06F 3/02, G05B 19/042, H02M 5/00, G06F 3/0362, G06F 3/0484

(54) **VERWENDUNG EINES ANZEIGEMITTELS EINES UMRICHTERS, VERFAHREN ZUM BETREIBEN EINES UMRICHTERS UND UMRICHTER**
USE OF A DISPLAY ELEMENT OF A CONVERTER, METHOD FOR OPERATING A CONVERTER, AND CONVERTER
UTILISATION D'UN AFFICHEUR DE CONVERTISSEUR, PROCÉDÉ POUR FAIRE FONCTIONNER UN CONVERTISSEUR ET CONVERTISSEUR

(30) Priorität: 29.07.2014 DE 102014010979
(43) Veröffentlichungstag der Anmeldung: 07.06.2017
(73) Patentinhaber: SEW-EURODRIVE GmbH & Co. KG, 76646 Bruchsal (DE)
(72) Erfinder: NIKOLA, Joachim, 76703 Kraichtal (DE)
(86) Internationale Anmeldenummer: PCT/EP2015/001410
(87) Internationale Veröffentlichungsnummer: WO 2016/015825

(56) Entgegenhaltungen:
- EP-A1- 1 079 287
- DE-A1-102008 036 380
- JP-A- H10 333 715
- JP-A- 2008 193 600
- KR-A- 20140 086 323
- US-A- 5 363 290

## Beschreibung

Die Erfindung betrifft ein Verwendung eines Anzeigemittels eines Umrichters, ein Verfahren zum Betreiben eines Umrichters und einen Umrichter.

Es ist allgemein bekannt, dass ein Umrichter Anzeigemittel zum Anzeigen eines Betriebsstatus aufweist.

**Aus der** EP 1 079 287 A1 **ist als nächstliegender Stand der Technik ein Umrichter bekannt, der einen Adressierkodierschalter und ein Mittel zur Detektion der Betätigung desselben aufweist.**

**Aus der** DE 10 2008 036 380 A1 **ist ein Verfahren zum sicheren Betreiben eines Feldgeräts bekannt.**

**Aus der** US 5 363 290 A **ist eine Beregnungsanlagensteuerung bekannt.**

**Aus der** JP H10 333715 A **ist ein Verfahren bekannt, wobei die IP-Adresse einer SPS, die durch einen internen nicht von außen zugänglichen DIP-Schalter eingestellt wird.**

Der Erfindung liegt daher die Aufgabe zugrunde, Fehler beim Betreiben von industriellen Anlagen zu vermeiden.

Erfindungsgemäß wird die Aufgabe bei der Verwendung eines Anzeigemittels eines Umrichters nach den in Anspruch 1, Verfahren zum Betreiben eines Umrichters nach den in Anspruch 8 und bei dem Umrichter nach den in Anspruch 9 angegebenen Merkmalen gelöst.

Wichtige Merkmale der Erfindung bei der Verwendung eines Anzeigemittels eines Umrichters sind, dass der Umrichter einen Adresskodierschalter, insbesondere an seinem Gehäuse, aufweist,
**wobei** bei Betätigung des Adresskodierschalters und für eine darauf nachfolgende vorgegebene Zeitspanne ein jeweiliger der jeweiligen Schalterstellung des Adresskodierschalters entsprechender Wert vom Anzeigemittel angezeigt wird und ansonsten Betriebsinformation des Umrichters angezeigt wird.

Von Vorteil ist dabei, dass beim Einstellen der Adresse ein für andere Zwecke verwendetes Anzeigeelement, insbesondere eine 7-Segment-Anzeige, zum Anzeigen der Adresse verwendbar ist und somit Fehler reduzierbar sind. Insbesondere ist nicht nur die direkte Beschriftung des Adresskodierschalters mit kleiner Schriftgröße verwendbar sondern die viel größere Anzeige des Anzeigemittels. Die Schriftgröße des Anzeigemittels ist dabei vorzugsweise mindestens doppelt so groß ausgeführt wie die Beschriftung des Adresskodierschalters auf dem Gehäuse des Adresskodierschalters. Somit ist eine sichere Erkennbarkeit gewährleistet und somit die Fehlerrate verringert.

Bei einer vorteilhaften Ausgestaltung weist die Zeitspanne einen Wert zwischen einer Sekunde und 100 Sekunden auf. Von Vorteil ist dabei, dass nach Betätigung des Adresskodierschalters für die Zeitspanne der mittels Adresskodierschalter eingegebene Adresswert angezeigt wird und somit der Bediener seine Eingabe optisch rückgemeldet bekommt. Er ist somit in die Lage versetzt innerhalb einer angemessenen Zeitspanne seine Eingabe zu kontrollieren.

Bei einer vorteilhaften Ausgestaltung weist die Betriebsinformation einen Status, insbesondere Betriebsstatus, insbesondere wie Typ des Regelverfahrens des Umrichters, Freigabeinformation oder Fehlerstatus, auf. Von Vorteil ist dabei, dass Betriebsinformation angezeigt wird, wenn keine Adresse eingegeben wird. Nur bei Adresseingabe wird für eine Zeitspanne die eingegebene Adresse visualisiert.

Bei einer vorteilhaften Ausgestaltung weist der Adresskodierschalter einen Drehschalter, insbesondere Drehschalter mit diskreten Drehstellungen und/oder Adresskodierdrehschalter, auf oder einen DIP-Schalter,
insbesondere wobei der Adresskodierschalter eine endliche Anzahl von Schaltstellungen aufweist. Von Vorteil ist dabei, dass eine digitale Anzeige, insbesondere wie 7-Segment-Anzeige, vorteilhaft ist. Denn die Darstellung der endlichen Anzahl ist dann in einfacher Weise ermöglicht. Besonders einfach ist die Anzeige dann, wenn jeder Drehschalter des Adresskodierschalters nur 16 Schalterstellungen oder weniger aufweist. Somit ist die Schalterstellung des jeweiligen Drehschalters mit jeweils einer 7-Segment-Anzeige darstellbar, insbesondere hexadezimal.

Bei einer vorteilhaften Ausgestaltung ist jeder Schalterstellung des Adresskodierschalters eine hexadezimale Zahl zugeordnet und die Schalterstellung entsprechend beschriftet ist auf dem Adresskodierschalter. Von Vorteil ist dabei, dass vom Bediener einerseits die Beschriftung und andererseits das Anzeigemittel wahrnehmbar ist. Somit ist die Fehlerrate weiter reduzierbar. Außerdem ist auch eine Information über die dem Umrichter während der Inbetriebnahme zugeordnete Adresse auch immer Normalbetrieb angezeigt, weil sie am Adresskodierschalter selbst ablesbar ist.

Bei einer vorteilhaften Ausgestaltung weist der Adresskodierschalter beschriftete Oberflächenabschnitte auf, wobei jeder Schalterstellung des Adresskodierschalters jeweils ein beschrifteter Oberflächenabschnitt zugeordnet ist. Von Vorteil ist dabei, dass ein einfaches Ablesen ermöglicht ist, welches auch bei Stromausfall erhalten bleibt.

Bei einer vorteilhaften Ausgestaltung entspricht die bei Betätigung des Adresskodierschalters und einer darauf nachfolgenden vorgegebenen Zeitspanne vom Anzeigemittel angezeigte Information der der entsprechenden Schalterstellung zugeordneten Beschriftung, insbesondere des zugeordneten beschrifteten Oberflächenabschnitts. Von Vorteil ist dabei, dass eine redundante Anzeige von Information vorhanden ist und somit die Fehlerrate vermindert ist.

Wichtige Merkmale bei **einem** Verfahren zum Betreiben eines Umrichters sind, dass der Umrichter einen Adresskodierschalter, insbesondere an seinem Gehäuse, und ein Anzeigemittel aufweist,
**wobei**
- die Betätigung des Adresskodierschalters detektiert wird
- nach einer jeweils detektierten Betätigung für eine nachfolgende vorgegebenen Zeitspanne ein jeweiliger der jeweiligen Schalterstellung des Adresskodierschalters entsprechender Wert vom Anzeigemittel angezeigt wird
und ansonsten anderweitige Betriebsinformation des Umrichters, insbesondere also nicht auf die Schalterstellung bezogene Werte oder Information, angezeigt wird.

Von Vorteil ist dabei, dass keine weiteren Anzeigemittel notwendig sind, da das vorhandene Anzeigemittel für die Dauer der Zeitspanne verwendbar ist zum Anzeigen der Adressinformation.

Wichtige Merkmale bei dem Umrichter sind, dass der Umrichter einen Adresskodierschalter, insbesondere an seinem Gehäuse, und ein Anzeigemittel aufweist,
**wobei**
- der Umrichter ein Mittel zur Detektion einer Betätigung des Adresskodierschalters und ein Mittel zur Zeitverzögerung nach einer jeweils detektierten Betätigung, insbesondere für eine nachfolgende vorgegebenen Zeitspanne, aufweist,
- wobei das Mittel zur Zeitverzögerung ein Freigabesignal erzeugt, welches
   - bei Freigabe ein das Anzeigemittel ansteuerndes Ansteuermittel derart steuert, dass dieses das Anzeigemittel derart ansteuert, dass ein jeweiliger der jeweiligen Schalterstellung des Adresskodierschalters entsprechender Wert vom Anzeigemittel angezeigt wird
   und bei Nicht-Freigabe das Ansteuermittel derart steuert, dass dieses das Anzeigemittel derart ansteuert, dass anderweitige Betriebsinformation des Umrichters, insbesondere also nicht auf die Schalterstellung bezogene Werte oder Information, angezeigt wird.

Von Vorteil ist dabei, dass mittels eines Sensors, also Mittels zur Erfassung des Betätigung des Adresskodierschalters, das Betätigen erkennbar ist. Vorzugsweise detektiert der Sensor eine von der Schalterstellung abhängige elektrische Größe, wie Strom oder Spannung.

Weitere Vorteile ergeben sich aus den Unteransprüchen.

Die Erfindung wird nun anhand von Abbildungen näher erläutert:

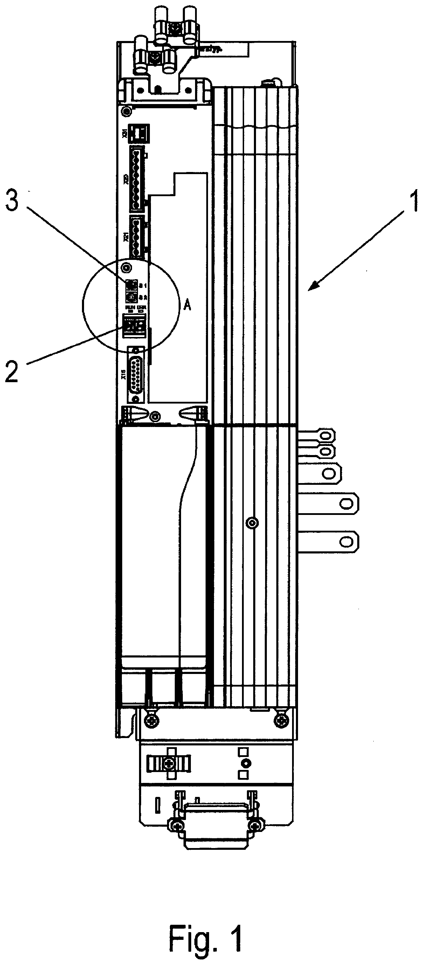

In der Figur 1 ist ein erfindungsgemäßes Feldgerät in Frontansicht gezeigt.

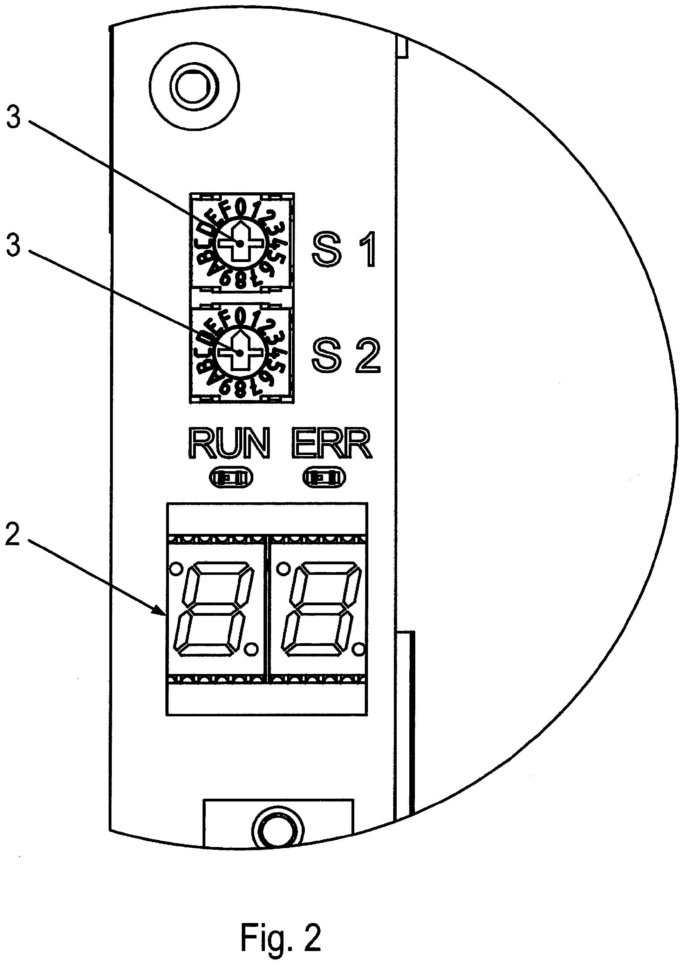

In der Figur 2 ist ein vergrößerter Ausschnitt gezeigt.

Das Feldgerät 1 ist als Busteilnehmer eines Datenbusses ausgeführt. Hierzu wird dem Feldgerät 1 bei Inbetriebnahme eine Adresse, also Teilnehmeradresse, vergeben.

Auf diese Weise ist es einer übergeordneten Steuerung, vorzugsweise Master, ermöglicht, Daten dem Feldgerät 1 zuzusenden. Dem jeweils gesendeten Datenpaket wird dabei die Adresse zugefügt, so dass das Feldgerät 1 die Daten empfängt und andere Feldgeräte, die gegebenenfalls ebenfalls als Busteilnehmer am Datenbus angeschlossen sind, das Datenpaket nicht beachten. Das Datenpaket enthält beispielsweise Befehlsdaten und/oder andere Daten.

Die Eingabe der Adresse am Feldgerät 1 erfolgt mittels Adresscodierschaltern, welche hier als Adresskodierdrehschalter 3 ausgeführt sind. Somit ist durch Drehen, also Einstellen der Drehstellung, die Adresse codierbar. Im Ausführungsbeispiel sind hier 16 Drehstellungen ermöglicht. Da jedoch zwei solcher Adresskodierdrehschalter 3 verwendet werden, sind Adressen zwischen 0 und 255 einstellbar.

Die Adresskodierschalter 3 sind zwar beschriftet, so dass jeder Drehstellung ein entsprechender Wert zugeordnet ist, jedoch ist die Beschriftung mit einer Schriftgröße ausgeführt, deren Ziffern oder Buchstaben kleiner sind als der Durchmesser des drehbaren Teils des Adresskodierdrehschalters 3.

Das Feldgerät 1 weist auch ein Anzeigemittel 3 auf. Im Ausführungsbeispiel ist dieses durch zwei 7-Segment-Anzeigen ausgeführt.

Im Betrieb wird das Anzeigemittel 3 verwendet, um Betriebsinformation, wie Status des Umrichters. Beispielsweise wird die Betriebsart oder ein Fehlerstatus des Umrichters angezeigt.

Bei Inbetriebnahme, insbesondere während des Einstellens der Adresse, wird keine Betriebsinformation des Umrichters angezeigt sondern die Schalterstellung der Adresskodierschalter.

Dabei wird die Schalterstellung des ersten Adresskodierschalters 3 digital in der ersten der beiden 7-Segment-Anzeigen angezeigt. Ebenso wird die Schalterstellung des zweiten Adresskodierschalters 3 mittels des zweiten der beiden 7-Segment-Anzeigen angezeigt.

Nach einer Zeitspanne werden die 7-Segment-Anzeigen wiederum verwendet, um die Betriebsinformation anzuzeigen.

Bei einer bevorzugten Ausführung wird das Betätigen, also Verändern der Stellung des Adresskodierschalters 3, detektiert. Bei Detektion des Betätigens wird dann die 7-Segment-Anzeige verwendet, um die Adressinformation, also Stellung des Adresskodierschalters, anzuzeigen. Nach Beendigung der Betätigung wird dann noch einen vorgegebene Zeitspanne das Anzeigen der Adressinformation aufrecht erhalten und danach dann umgeschaltet zum Anzeigen der Betriebsinformation.

Somit ist beim Einstellen der Adressinformation und einer nachfolgenden vorgegebenen Zeitspanne das Anzeigemittel 3 zum Anzeigen der eingegebenen Adressinformation verwendet, danach zum Anzeigen der Betriebsinformation.

Auch bei nach der Inbetriebnahme erfolgender Adressänderung, also Betätigen des Adresskodierschalters 3, wird wiederum für die Zeitdauer der Betätigung und eine nachfolgende Zeitspanne das Anzeigemittel zum Anzeigen der der Schalterstellung zugeordneten Adressinformation verwendet.

Vorzugsweise ist mit jeder der 7-Segment-Anzeigen eine hexadezimale Ziffer anzeigbar. Somit wird die 7-Segment-Anzeige optimal ausgenutzt. Mit den beiden hexadezimalen Ziffern sind somit 256 verschiedene Adressen anzeigbar.

Bei einem weiteren erfindungsgemäßen Ausführungsbeispiel sind statt der Adresskodierdrehschalter 3 andere Adresskodierschalter eingesetzt. Bevorzugst hierzu sind DIP-Schalter verwendbar. Diese weisen ebenfalls an jedem Schalter eine Beschriftung auf. Bei Betätigung des jeweiligen DIP-Schalters wird die der jeweiligen Schalterstellung entsprechende Information angezeigt.

### Bezugszeichenliste

- 1: Feldgerät, insbesondere Umrichter
- 2: Anzeigemittel, insbesondere 7-Segment-Anzeige
- 3: Adresskodierdrehschalter

## Patentansprüche

1. Verwendung eines Anzeigemittels (2) eines Umrichters (1),
wobei der Umrichter (1) einen Adresskodierschalter (3), insbesondere an seinem Gehäuse, aufweist,
**dadurch gekennzeichnet, dass**
bei Betätigung des Adresskodierschalters (3) und für eine darauf nachfolgende vorgegebene Zeitspanne ein jeweiliger einer jeweiligen Schalterstellung des Adresskodierschalters (3) entsprechender Wert vom Anzeigemittel (2) angezeigt wird und ansonsten Betriebsinformation des Umrichters (1) angezeigt wird.

2. Verwendung nach Anspruch 1,
**dadurch gekennzeichnet, dass**
die Zeitspanne einen Wert zwischen einer Sekunde und 100 Sekunden aufweist.

3. Verwendung nach mindestens einem der vorangegangenen Ansprüche,
**dadurch gekennzeichnet, dass**
die Betriebsinformation einen Status, insbesondere Betriebsstatus, insbesondere wie Typ des Regelverfahrens des Umrichters (1), Freigabeinformation oder Fehlerstatus, aufweist.

4. Verwendung nach mindestens einem der vorangegangenen Ansprüche,
**dadurch gekennzeichnet, dass**
der Adresskodierschalter (3) ein Drehschalter, insbesondere Drehschalter mit diskreten Drehstellungen und/oder Adresskodierdrehschalter, ist oder ein DIP-Schalter, insbesondere wobei der Adresskodierschalter (3) eine endliche Anzahl von Schaltstellungen aufweist.

5. Verwendung nach mindestens einem der vorangegangenen Ansprüche,
**dadurch gekennzeichnet, dass**
jeder Schalterstellung des Adresskodierschalters (3) eine hexadezimale Zahl zugeordnet ist und die Schalterstellung entsprechend beschriftet ist auf dem Adresskodierschalter (3).

6. Verwendung nach mindestens einem der vorangegangenen Ansprüche,
**dadurch gekennzeichnet, dass**
der Adresskodierschalter (3) beschriftete Oberflächenabschnitte aufweist, wobei jeder Schalterstellung des Adresskodierschalters (3) jeweils ein beschrifteter Oberflächenabschnitt zugeordnet ist.

7. Verwendung nach mindestens einem der vorangegangenen Ansprüche,
**dadurch gekennzeichnet, dass**
die bei Betätigung des Adresskodierschalters (3) und einer darauf nachfolgenden vorgegebenen Zeitspanne vom Anzeigemittel (2) angezeigte Information der der entsprechenden Schalterstellung zugeordneten Beschriftung, insbesondere des zugeordneten beschrifteten Oberflächenabschnitts, entspricht.

8. Verfahren zum Betreiben eines Umrichters,
wobei der Umrichter (1) einen Adresskodierschalter (3), insbesondere an seinem Gehäuse, aufweist,
**dadurch gekennzeichnet, dass**
- der Umrichter (1) ein Anzeigemittel (2) aufweist,
- eine Betätigung des Adresskodierschalters (3) detektiert wird
- nach einer jeweils detektierten Betätigung für eine nachfolgende vorgegebenen Zeitspanne ein jeweiliger einer jeweiligen Schalterstellung des Adresskodierschalters (3) entsprechender Wert vom Anzeigemittel (2) angezeigt wird
und ansonsten anderweitige Betriebsinformation des Umrichters (1), insbesondere also nicht auf die Schalterstellung bezogene Werte oder Information, angezeigt wird.

9. Umrichter (1), insbesondere zur Durchführung eines Verfahrens nach Anspruch 8,
wobei der Umrichter (1) einen Adresskodierschalter (3), insbesondere an seinem Gehäuse, aufweist,
**dadurch gekennzeichnet, dass**
- der Umrichter (1) ein Mittel zur Detektion einer Betätigung des Adresskodierschalters (3), ein Anzeigemittel (2) und ein Mittel zur Zeitverzögerung nach einer jeweils detektierten Betätigung, insbesondere für eine nachfolgende vorgegebenen Zeitspanne, aufweist,
- wobei das Mittel zur Zeitverzögerung ein Freigabesignal erzeugt, welches
- bei Freigabe ein das Anzeigemittel (2) ansteuerndes Ansteuermittel derart steuert, dass dieses das Anzeigemittel (2) derart ansteuert, dass ein jeweiliger einer jeweiligen Schalterstellung des Adresskodierschalters (3) entsprechender Wert vom Anzeigemittel (2) angezeigt wird und bei Nicht-Freigabe das Ansteuermittel derart steuert, dass dieses das Anzeigemittel (2) derart ansteuert, dass anderweitige Betriebsinformation des Umrichters (1), insbesondere also nicht auf die Schalterstellung bezogene Werte oder Information, angezeigt wird.

## Claims

1. Use of a display means (2) of a converter (1), the converter (1) having an address coding switch (3), in particular on its housing,
**characterised in that**
when the address coding switch (3) is actuated, the display means (2) displays a particular value corresponding to a particular switch position of the address coding switch (3) for a predetermined period of time thereafter, and otherwise operating information of the converter (1) is displayed.

2. Use according to claim 1,
**characterised in that**
the time period has a value between 1 second and 100 seconds.

3. Use according to at least one of the preceding claims,
**characterised in that**
the operating information comprises a status, in particular an operating status, in particular such as the type of control procedure of the converter (1), release information or a fault status.

4. Use according to at least one of the preceding claims,
**characterised in that**
the address coding switch (3) is a rotary switch, in particular a rotary switch having discrete rotational positions and/or an address coding rotary switch, or a DIP switch, the address coding switch (3) in particular having a finite number of switching positions.

5. Use according to at least one of the preceding claims,
**characterised in that**
a hexadecimal number is assigned to each switch position of the address coding switch (3) and the switch position is labelled accordingly on the address coding switch (3).

6. Use according to at least one of the preceding claims,
**characterised in that**
the address coding switch (3) has labelled surface portions, each switch position of the address coding switch (3) being assigned a labelled surface portion.

7. Use according to at least one of the preceding claims,
**characterised in that**
the information displayed by the display means (2) for a predetermined period of time when the address coding switch (3) is actuated corresponds to the label, in particular of the assigned labelled surface portion, assigned to the corresponding switch position.

8. Method for operating a converter, the converter (1) having an address coding switch (3), in particular on its housing,
**characterised in that**
- the converter (1) has a display means (2),
- actuation of the address coding switch (3) is detected,
- after each detected actuation, the display means (2) displays a particular value corresponding to a particular switch position of the address coding switch (3) for a predetermined period of time thereafter, and otherwise different operating information of the converter (1) is displayed, in particular therefore values or information not related to the switch position.

9. Converter (1), in particular for carrying out a method according to claim 8, the converter (1) having an address coding switch (3), in particular on its housing,
**characterised in that**
- the converter (1) has a means for detecting actuation of the address coding switch (3), a display means (2) and a means for producing a time delay following each detected actuation, in particular for a predetermined period of time thereafter,
- the time-delay means generating a release signal which
- in the event of release, controls an actuation means actuating the display means (2) such that said actuation means controls the display means (2) in such a way that the display means (2) displays a particular value corresponding to a particular switch position of the address coding switch (3) and
- in the event of non-release, controls the actuation means such that said actuation means actuates the display means (2) in such a way as to display different operating information of the converter (1), in particular therefore not values or information related to the switch position.

## Revendications

1. Utilisation d'un moyen d'affichage (2) d'un onduleur (1),
l'onduleur (1) présentant un commutateur de codage d'adresse (3), en particulier sur son boîtier,
**caractérisé en ce que**
lorsque le commutateur de codage d'adresse (3) est actionné et pendant un intervalle de temps prédéfini suivant, une valeur respective correspondant à une position de commutateur respective du commutateur de codage d'adresse (3) est affichée par le moyen d'affichage (2) et sinon des informations de fonctionnement de l'onduleur (1) sont affichées.

2. Utilisation selon la revendication 1,
**caractérisée en ce que**
l'intervalle de temps présente une valeur comprise entre une seconde et 100 secondes.

3. Utilisation selon au moins l'une des revendications précédentes,
**caractérisée en ce que**
les informations de fonctionnement présentent un état, en particulier un état de fonctionnement, en particulier tel que le type du procédé de régulation de l'onduleur (1), une information de libération ou un état de défaut.

4. Utilisation selon au moins l'une des revendications précédentes,
**caractérisée en ce que**
le commutateur de codage d'adresse (3) est un commutateur rotatif, en particulier un commutateur rotatif avec des positions de rotation discrètes et/ou un commutateur rotatif de codage d'adresse, ou un commutateur DIP, le commutateur de codage d'adresse (3) présentant en particulier un nombre fini de positions de commutation.

5. Utilisation selon au moins l'une des revendications précédentes,
**caractérisée en ce**
**qu'**un nombre hexadécimal est associé à chaque position de commutateur du commutateur de codage d'adresse (3) et la position de commutateur est marquée de façon correspondante sur le commutateur de codage d'adresse (3).

6. Utilisation selon au moins l'une des revendications précédentes,
**caractérisée en ce que**
le commutateur de codage d'adresse (3) présente des parties de surface marquées, une partie de surface marquée étant associée à chaque position de commutateur du commutateur de codage d'adresse (3).

7. Utilisation selon au moins l'une des revendications précédentes,
**caractérisée en ce que**
les informations affichées par le moyen d'affichage (2) lorsque le commutateur de codage d'adresse (3) est actionné et pendant un intervalle de temps prédéfini suivant correspondent au marquage associé à la position de commutateur correspondante, en particulier à la partie de surface marquée associée.

8. Procédé de fonctionnement d'un onduleur,
l'onduleur (1) présentant un commutateur de codage d'adresse (3), en particulier sur son boîtier,
**caractérisé en ce que**
- l'onduleur (1) présente un moyen d'affichage (2),
- un actionnement du commutateur de codage d'adresse (3) est détecté,
- après un actionnement détecté respectif et pendant un intervalle de temps prédéfini suivant, une valeur respective correspondant à une position de commutateur respective du commutateur de codage d'adresse (3) est affichée par le moyen d'affichage (2) et sinon d'autres informations de fonctionnement de l'onduleur (1), en particulier des valeurs ou informations non liées à la position de commutateur, sont affichées.

9. Onduleur (1), en particulier pour mettre en œuvre un procédé selon la revendication 8,
l'onduleur (1) présentant un commutateur de codage d'adresse (3), en particulier sur son boîtier,
**caractérisé en ce que**
- l'onduleur (1) présente un moyen pour détecter un actionnement du commutateur de codage d'adresse (3), un moyen d'affichage (2) et un moyen de temporisation après un actionnement détecté respectif, en particulier pendant un intervalle de temps prédéfini suivant,
- le moyen de temporisation générant un signal de libération qui, en cas de libération, commande un moyen d'actionnement actionnant le moyen d'affichage (2) de telle sorte que celui-ci actionne le moyen d'affichage (2) de manière à ce qu'une valeur respective correspondant à une position de commutateur respective du commutateur de codage d'adresse (3) soit affichée par le moyen d'affichage (2) et, en cas de non-libération, commande le moyen d'actionnement de telle sorte que celui-ci actionne le moyen d'affichage (2) de manière à ce que d'autres informations de fonctionnement de l'onduleur (1), en particulier des valeurs ou informations non liées à la position de commutateur, soient affichées.
